# EUROPÄISCHE PATENTSCHRIFT

(11) **EP 2 487 390 B1**
(45) Veröffentlichungstag und Bekanntmachung des Hinweises auf die Patenterteilung: **18.05.2016**
(21) Anmeldenummer: 12152378.1
(22) Anmeldetag: 25.01.2012
(51) Int. Cl.: F16H 61/4148, F04B 49/00, F04B 49/06, F04B 49/22

(54) **Hydrostatisches Antriebsystem**
Hydrostatic drive system
Système d'entraînement hydrostatique

(30) Priorität: 14.02.2011 DE 102011011138
(43) Veröffentlichungstag der Anmeldung: 15.08.2012
(73) Patentinhaber: Linde Hydraulics GmbH & Co. KG, 63743 Aschaffenburg (DE)
(72) Erfinder: Dölger, Marcus, 63808 Haibach (DE)
(74) Vertreter: Geirhos, Johann

(56) Entgegenhaltungen:
- WO-A1-03/093702
- DE-A1- 3 508 432
- DE-A1-102007 045 803
- DE-A1-102008 038 381
- GB-A- 1 415 977

## Beschreibung

Die Erfindung betrifft ein hydrostatisches Antriebssystem mit einer im Fördervolumen verstellbaren Pumpe, die zur Versorgung mindestens eines Verbrauchers vorgesehen ist, wobei eine Fördervolumenstelleinrichtung der Pumpe mittels eines Vorgabesignals in Richtung einer Erhöhung des Fördervolumens beaufschlagt ist und in Abhängigkeit von einem den überschüssig geförderten Volumenstrom der Pumpe erfassenden, hydraulischen Rückstellsignal in Richtung einer Verringerung des Fördervolumens beaufschlagt ist, wobei zur Erzeugung des Rückstellsignals eine Umlaufdruckwaage vorgesehen ist, die in einem eine Förderleitung der Pumpe mit einem Behälter verbindenden Strömungspfad angeordnet ist und in einer Rückstellsignalerzeugungsstellung das hydraulische Rückstellsignal erzeugt.

Bei derartigen Antriebssystemen wird das Fördervolumen der Pumpe auf den von den angesteuerten Verbrauchern angeforderten Volumenstrombedarf geregelt, wodurch die Verbraucher mit einer an dem Steuerventil vorgegebenen Bewegungsgeschwindigkeit bei geringen Energieverlusten betrieben werden können.

Bei bekannten Load-Sensing-Antriebssystemen, bei denen die Pumpe im offenen Kreislauf betrieben ist und zur Steuerung der Verbraucher entsprechende Steuerventile vorgesehen sind, ist das Fördervolumen der Pumpe von dem höchsten Lastdruck der angesteuerten Verbraucher und einer Regeldruckdifferenz geregelt. Bei einer Ansteuerung eines oder mehrerer Steuerventile wird an den Steuerventilen jeweils ein bestimmter Öffnungsquerschnitt eingestellt. Die Pumpe wird durch den sich einstellenden höchsten Lastdruck der angesteuerten Verbraucher solange in Richtung einer Zunahme des Fördervolumens verstellt, bis der Förderdruck der Pumpe um die Regeldruckdifferenz höher als der höchste Lastdruck der angesteuerten Verbraucher ist. Hierdurch wird erzielt, dass von der Pumpe derjenige Volumenstrombedarf geliefert wird, der von den angesteuerten Verbrauchern durch die entsprechenden Öffnungsquerschnitte der Steuerventile angefordert wird.

Aufgrund der Regelung des Fördervolumens der Pumpe in Abhängigkeit von dem höchsten Lastdruck der angesteuerten Verbraucher ergibt sich jedoch ein zeitverzögertes Ansprechverhalten der Fördervolumenregelung der Pumpe und somit ein spürbarer Zeitverzug zwischen der Einleitung der Bewegung durch Ansteuerung des entsprechenden Steuerventils und dem sich einstellenden Bewegungsbeginn des Verbrauchers, da der die Pumpe steuernde Lastdruck erst erzeugt wird, nachdem die Steuerventile in eine Öffnungsstellung beaufschlagt sind. Dies wird von einer Bedienperson als eine geringe Dynamik des Antriebssystems empfunden.

Um diesen Nachteil zu vermeiden, ist bei gattungsgemäßen Antriebssystemen die Fördervolumenstelleinrichtung der in der Fördermenge verstellbaren Verstellpumpe von einem Vorgabesignal in Richtung einer Erhöhung des Fördervolumens beaufschlagt. Zum Ausregeln der Fördermenge der Pumpe auf den angeforderten Förderstrombedarf der angesteuerten Verbraucher dient ein hydraulisches Rückstellsignal, das die Fördervolumenstelleinrichtung in Richtung einer Verringerung des Fördervolumens beaufschlagt. Zur Erzeugung des hydraulischen Rückstellsignals ist eine Umlaufdruckwaage vorgesehen ist, die in einer die Förderleitung mit einem Behälter verbindenden Zweigleitung angeordnet ist. In einer als Durchflussstellung ausgebildeten Rückstellsignalerzeugungsstellung wird an einer in der Zweigleitung stromab der Umlaufdruckwaage angeordneten, als Staudüse ausgebildeten Drosseleinrichtung ein Staudruck als hydraulisches Rückstellsignal erzeugt.

Gattungsgemäße Antriebssysteme sind aus der DE 10 2008 038 381 A1 und der DE 10 2008 038 382 A1 bekannt. Bei der DE 10 2008 038 381 A1 ist die Pumpe elektro-hydraulisch im Fördervolumen steuerbar bzw. regelbar. Bei der DE 10 2008 038 382 A1 erfolgt die Steuerung bzw. Regelung des Fördervolumens der Pumpe mechanisch-hydraulisch. Das hydraulische Rückstellsignal, das die Fördervolumenstelleinrichtung in Richtung einer Verringerung des Fördervolumens beaufschlagt, wird an einer Umlaufdruckwaage, die in einer die Förderleitung der Pumpe mit einem Behälter verbindenden Zweigleitung angeordnet ist, und einer stromab der Umlaufdruckwaage in der Zweigleitung angeordneten, als Staudüse ausgebildeten Drosseleinrichtung erzeugt.

Durch die Anordnung der als Staudüse angeordneten Drosseleinrichtung in der Zweigleitung stromab der Umlaufdruckwaage kann jedoch in der als Durchflussstellung ausgebildeten Rückstellsignalerzeugungsstellung der Umlaufdruckwaage eine von der Pumpe geförderte Überschussmenge an Förderstrom, die den Bedarf der angesteuerten Verbraucher übersteigt, und somit ein Leistungsvolumenstrom der Pumpe nicht zu dem Behälter abgebaut werden. Um den Abbau des von der Pumpe überschüssig geförderten Förderstroms zu ermöglichen, ist bei derartigen gattungsgemäßen Antriebssystemen ein zusätzliches Überströmventil erforderlich.

Der vorliegenden Erfindung liegt die Aufgabe zugrunde, ein hydrostatisches Antriebssystem der eingangs genannten Gattung zur Verfügung zu stellen, das bei geringem Bauaufwand einen Abbau eines Leistungsvolumenstroms der Pumpe zu dem Behälter ermöglicht.

Diese Aufgabe wird erfindungsgemäß dadurch gelöst, dass die Umlaufdruckwaage neben der Rückstellsignalerzeugungsstellung eine Förderstromabbaustellung zum Abbau des Pumpenförderstroms der Pumpe zu dem Behälter aufweist. Der erfindungsgemäße Gedanke besteht somit darin, an der zur Erzeugung des hydraulischen Rückstellsignals bereits vorhandenen Umlaufdruckwaage eine weitere, zusätzliche Steuerstellung in Form einer Förderstromabbaustellung vorzusehen, in der der Pumpenförderstrom zum Behälter abgebaut werden kann. Die erfindungsgemäße Umlaufdruckwaage weist somit mit der Rückstellsignalerzeugungsstellung einen Signalpfad zur Erzeugung des hydraulischen Rückstellsignals für die Pumpenregelung und mit der Förderstromabbaustellung einen getrennten, zusätzlichen Leistungspfad auf, in der der überschüssig geförderte Pumpenförderstrom zum Behälter abgebaut werden kann. Sofern zur Erzeugung des hydraulischen Rückstellsignal die Umlaufdruckwaage in einer die Förderleitung mit einem Behälter verbindenden Zweigleitung angeordnet ist und in Rückstellsignalerzeugungsstellung an einer in der Zweigleitung stromab der Umlaufdruckwaage angeordneten, als Staudüse ausgebildeten Drosseleinrichtung ein Staudruck als hydraulisches Rückstellsignal erzeugt wird, kann in der zusätzlichen Förderstromabbaustellung der von der Pumpe überschüssig geförderte Pumpenförderstrom unter Umgehung der zur Erzeugung des hydraulischen Rückstellsignals erforderlichen Drosseleinrichtung zum Behälter abgebaut werden kann. Mit der erfindungsgemäßen Umlaufdruckwaage wird es somit ohne zusätzliche Ventile, beispielsweise eines Überströmventils, und somit bei geringem Bauaufwand ermöglicht, die von der Pumpe geförderte Überschussmenge an Druckmittelstrom, die den Bedarf der angesteuerten Verbraucher übersteigt, und somit einen Leistungsvolumenstrom der Pumpe über die Umlaufdruckwaage zum Behälter abzubauen.

Gemäß einer bevorzugten Ausführungsform der Erfindung ist die Umlaufdruckwaage eingangsseitig an eine von der Förderleitung der Pumpe abzweigende Förderzweigleitung angeschlossen und ausgangsseitig an eine Signalleitung angeschlossen sowie ausgangsseitig an eine zu dem Behälter geführte Ablaufleitung angeschlossen. Durch den zusätzlichen ausgangsseitigen Anschluss der Umlaufdruckwaage an die zu dem Behälter geführte Ablaufleitung kann mit geringem zusätzlichen Bauaufwand an der Umlaufdruckwaage eine Verbindung der Förderleitung der Pumpe mit dem Behälter unter Umgehung der zur Erzeugung des hydraulischen Rückstellsignals gegebenenfalls vorhandenen Drosseleinrichtung in der Signalleitung erzielt werden, um einen Abbau eines Leistungsvolumenstroms und somit des überschüssig geförderten Pumpenvolumenstroms zum Behälter zu ermöglichen.

Die Erzeugung des hydraulischen Rückstellsignals kann gemäß einer vorteilhaften Ausführungsform der Erfindung an einer entsprechenden Steuerkante der Umlaufdruckwaage erzeugt werden, wobei die Signalleitung als eine das hydraulische Rückstellsignal führende Rückstellsignalleitung an die Pumpe zur Pumpenregelung zurückgeführt ist. Die Umlaufdruckwaage erzeugt somit in der Rückstellsignalerzeugungsstellung mittels einer entsprechenden Steuer- bzw. Regelkante das hydraulische Rückstellsignal, so dass die Signalleitung direkt an die Pumpe zu deren Fördermengenregelung zurückgeführt werden kann.

Gemäß einer alternativen Ausführungsform der Erfindung steht die Signalleitung mit dem Behälter in Verbindung steht und ist zur Erzeugung des hydraulischen Rückstellsignals in der Signalleitung eine Drosseleinrichtung angeordnet, wobei an die Signalleitung zwischen der Umlaufdruckwaage und der Drosseleinrichtung eine Zweigleitung als eine das hydraulische Rückstellsignal führende Rückstellsignalleitung angeschlossen ist, die an die Pumpe zur Pumpenregelung zurückgeführt ist. Das hydraulische Rückstellsignal wird somit von dem Staudruck gebildet, der in der Rückstellsignalerzeugungsstellung der Umlaufdruckwaage an der Drosseleinrichtung aufgestaut wird, die in der zu dem Behälter geführten Signalleitung angeordnet ist.

Mit besonderem Vorteil weist die Umlaufdruckwaage eine Sperrstellung auf, in der die Verbindung der Förderzweigleitung mit der Signalleitung und der Ablaufleitung abgesperrt ist, die Rückstellsignalerzeugungsstellung auf, in der die Förderzweigleitung mit der Signalleitung in Verbindung steht, und eine Förderstromabbaustellung auf, in der Förderzweigleitung mit der Ablaufleitung in Verbindung steht. In der zusätzlichen Förderstromabbaustellung der Umlaufdruckwaage, in der die mit der Förderleitung der Pumpe in Verbindung stehende Förderzweigleitung mit der Ablaufleitung und gegebenenfalls mit der Signalleitung in Verbindung steht, kann die von der Pumpe geförderte Überschussmenge als Leistungsvolumenstrom der Pumpe auf einfache Weise unter Umgehung des von der Signalleitung gebildeten Signalpfades mit der gegebenenfalls vorhandenen Drosseleinrichtung zum Behälter abgebaut werden.

Gemäß einer vorteilhaften Ausführungsform der Erfindung ist die Rückstellsignalerzeugungsstellung zwischen der Sperrstellung und der Förderstromabbaustellung der Umlaufdruckwaage angeordnet. Durch die Anordnung der Rückstellsignalerzeugungsstellung zwischen der Sperrstellung und der Förderstromabbaustellung der Umlaufdruckwaage wird erzielt, dass in der Rückstellsignalerzeugungsstellung das hydraulische Rückstellsignal zur Pumpenregelung erzeugt werden kann, bevor die Umlaufdruckwaage in die Förderstromabbaustellung gelangt. Der Pumpe kann somit auf einfache Weise vor dem Öffnen des Leistungspfades in der Förderstromabbaustellung der Umlaufdruckwaage das in der Rückstellsignalerzeugungsstellung erzeugte hydraulische Rückstellsignal für den von den angesteuerten Verbrauchern angeforderten Volumenstrom zur Pumpenregelung gemeldet werden. Leistungsverluste, die in der Förderstromabbaustellung der Umlaufdruckwaage durch die Verbindung der Förderleitung mit dem Behälter entstehen, können durch die vorgelagerte Signalmeldung des hydraulischen Rückstellsignals somit verringert bzw. vermieden werden.

Die Umlaufdruckwaage ist gemäß einer zweckmäßigen Ausgestaltungsform der Erfindung in Richtung der Sperrstellung von dem höchsten Lastdruck der angesteuerten Verbraucher sowie einer Federeinrichtung beaufschlagt und in Richtung der Rückstellsignalerzeugungsstellung sowie der Förderstromabbaustellung von dem Förderdruck der Pumpe beaufschlagt. Durch die Beaufschlagung der Umlaufdruckwaage von dem höchsten Lastdruck der angesteuerten Verbrauchern und der Federvorspannung der Federeinrichtung, die der Regeldruckdifferenz des Load-Sensing-Systems entspricht, entgegen dem Förderdruck der Pumpe kann von der erfindungsgemäßen Umlaufdruckwaage differenzdruckabhängig in der Förderstromabbaustellung durch den Abbau des Leistungsvolumenstroms der Pumpe zum Behälter Leistung aus dem Antriebssystem entnommen und abgebaut werden, um Folgeschäden zu vermeiden.

Besondere Vorteile ergeben sich, wenn die Federeinrichtung eine gestufte Federvorspannung beim Übergang der Umlaufdruckwaage von der Rückstellsignalerzeugungsstellung in die Förderstromabbaustellung aufweist. Mit einer gestuften Federvorspannung und somit einer an die Auslenkung der Umlaufdruckwaage angepasste Auslegung der Federvorspannung kann beim Übergang von der Rückstellsignalerzeugungsstellung in die Förderstromabbaustellung und somit im Moment der Verbindung des Leistungsvolumenstroms der Pumpe mit dem Behälter durch eine Erhöhung der Federvorspannung die Regeldruckdifferenz des Load-Sensing-Systems angehoben werden. Eine gestufte Federvorspannung kann beispielsweise durch die Verwendung mehrerer Federn erzielt werden, die abhängig von der Auslenkung und somit dem Hub der Umlaufdruckwaage betätigt werden.

Weitere Vorteile und Einzelheiten der Erfindung werden anhand der in den schematischen Figuren dargestellten Ausführungsbeispiele näher erläutert. Hierbei zeigt
- Figur 1: einen Schaltplan einer ersten Ausführungsform eines erfindungsgemäßen, hydrostatischen Antriebssystems,
- Figur 2: einen Schaltplan einer zweiten Ausführungsform eines erfindungsgemäßen, hydrostatischen Antriebssystems,
- Figur 3: die Umlaufdruckwaage der Figuren 1 und 2 in einer vergrößerten Darstellung und
- Figur 4: eine weitere Ausführungsform der Erfindung.

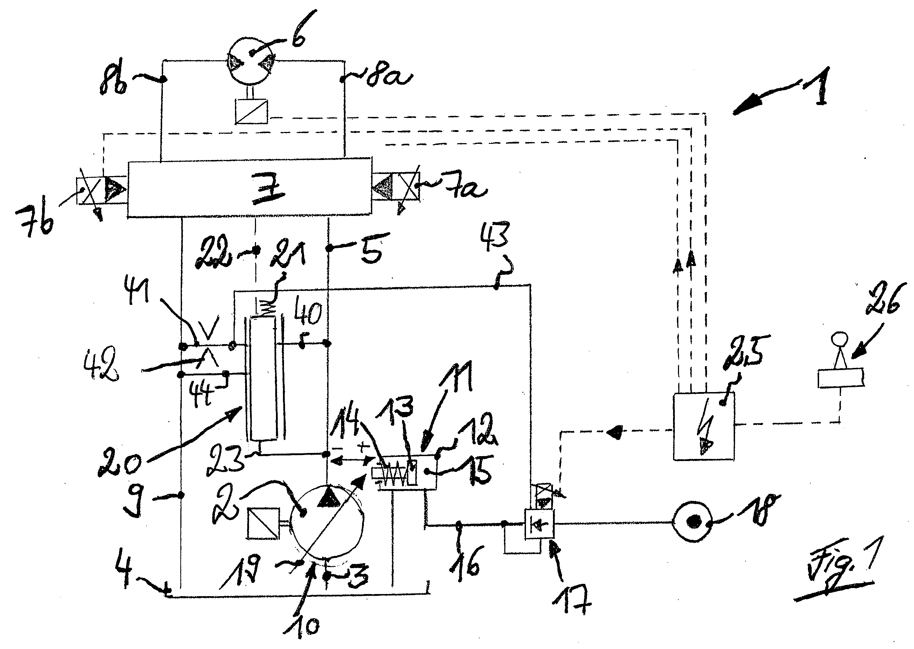

In der Figur 1 ist ein Schaltplan eines erfindungsgemäßen, Load-Sensing geregelten Antriebssystems 1 dargestellt.

Das Antriebssystem 1 weist eine im Fördervolumen verstellbare Pumpe 2 auf, die im offenen Kreislauf betrieben ist. Die Pumpe 2 steht mittels einer Leitung 3 mit einem Behälter 4 in Verbindung und fördert in einer Förderleitung 5. Zur Steuerung eines oder mehrerer Verbraucher 6 ist jeweils ein Steuerventil 7 vorgesehen, das als in Zwischenstellungen drosselndes Wegeventil ausgebildet ist. Das Steuerventil 7 ist an die Förderleitung 5, eine Behälterleitung 9 sowie zu dem Verbraucher 6 geführte Druckmittelleitungen 8a, 8b angeschlossen. Bei einer Betätigung des Steuerventils 7 steuert das Steuerventil 7 die Verbindung von zu dem Verbraucher 6 geführten Druckmittelleitungen 8a, 8b mit der Förderleitung 5 und einer Behälterleitung 9 und gibt in Abhängigkeit von einem Ansteuersignal einen bestimmten Öffnungsquerschnitt von der Förderleitung 5 zur Druckmittelleitung 8a bzw. 8b frei. Dem Steuerventil 7 sind nicht näher dargestellte Druckwaagen zur lastdruckunabhängigen Steuerung der Bewegungsgeschwindigkeit des Verbrauchers 6 zugeordnet.

Die Pumpe 2 ist verstellbare Pumpe ausgebildet, deren Fördervolumen mittels einer Fördervolumenstelleinrichtung 10 einstellbar ist. Hierzu ist eine Stellkolbeneinrichtung 11 vorgesehen, die einen in einem Stellzylinder 12 angeordneten Stellkolben 13 aufweist, der mit einem Fördervolumenstellglied 19, beispielsweise einer in der Neigung verstellbaren Schrägscheibe, der Fördervolumenstelleinrichtung 10 in Wirkverbindung steht.

Der Stellkolben 13 ist mittels einer Feder 14 in Richtung eines maximalen Fördervolumens beaufschlagbar. In Richtung des minimalen Fördervolumens ist der Stellkolben 13 von einem in einem Steuerdruckraum 15 der Stellkolbeneinrichtung 11 anstehenden Stelldruck beaufschlagbar.

Die Pumpe 2 der Figur 1 ist mittels eines Vorgabesignals in Richtung einer Erhöhung der Fördermenge beaufschlagbar. Die Fördervolumenstelleinrichtung 10 der Pumpe 2 ist hierzu als elektro-hydraulische Verstellung ausgebildet, bei der der Steuerdruckraum 15 mit einer Stelldruckleitung 16 in Verbindung, in der ein elektrisch ansteuerbares Stelldruckventil 17 angeordnet ist, das den im Steuerdruckraum 15 anstehenden Stelldruck erzeugt. Das Stelldruckventil 17 steht eingangsseitig mit einer Steuerdruckquelle 18, beispielsweise einer Speisepumpe oder Steuerdruckpumpe, des Antriebssystems 1 in Verbindung. Es ist jedoch ebenfalls möglich, das Stelldruckventil 17 eingangsseitig an die Förderleitung 5 anzuschließen. Der mit der Feder 14 versehene Federraum der Stellkolbeneinrichtung 11 ist zum Behälter 4 entlastet. Der Federraum kann alternativ mit der Förderleitung 5 in Verbindung stehen.

Zur Ansteuerung des Steuerventils 17 ist eine elektronische Steuereinrichtung 25 vorgesehen, die eingangsseitig mit einer Vorgabeeinrichtung 26, beispielsweise einem Joystick, in Wirkverbindung steht. Das Steuerventil 7 weist zu dessen Betätigung entsprechende elektrische Betätigungseinrichtungen 7a, 7b, beispielsweise Magnete, auf, die ausgangsseitig mit der Steuereinrichtung 26 in Verbindung stehen. Anstelle elektrischer Betätigungseinrichtungen 7a, 7b kann das Steuerventil 7 ebenfalls hydraulisch beaufschlagt sein, wobei zur Erzeugung eines das Steuerventil 7 beaufschlagenden Steuerdrucks elektrisch ansteuerbare Steuerdruckventile vorgesehen sein können, die ausgangsseitig mit der Steuereinrichtung 25 in Verbindung stehen.

Die Steuereinrichtung 25 steht weiterhin ausgangsseitig mit dem elektrisch ansteuerbares Stelldruckventil 17 zu dessen Betätigung durch ein entsprechendes elektrisches Vorgabesignal in Verbindung. Die elektronische Steuereinrichtung 25 bildet hierbei eine Vorgabeeinrichtung, die die Fördervolumenstelleinrichtung 10 der Pumpe 2 in Abhängigkeit von einem Ansteuersignals zur Betätigung des Steuerventils 7 und somit einem Ansteuersignal zur Betätigung des Verbrauchers in Richtung einer Erhöhung des Fördervolumens beaufschlagt, indem durch eine entsprechende Ansteuerung des Stelldruckventils 17 mit einem elektrischen Vorgabesignal der im Steuerdruckraum 15 anstehende Steuerdruck reduziert wird.

In einem die Förderleitung 5 mit der Behälterleitung 9 und somit dem Behälter 4 verbindenden Strömungspfad ist eine Umlaufdruckwaage 20 angeordnet.

Die Umlaufruckwaage 20 ist eingangsseitig an eine von der Förderleitung 5 der Pumpe 2 abzweigende Förderzweigleitung 40 angeschlossen. Ausgangsseitig ist die Umlaufdruckwaage 20 an eine Signalleitung 41 angeschlossen. Die Signalleitung 41 ist an die Behälterleitung 9 angeschlossen und somit zu dem Behälter 4 geführt, wobei in der Signalleitung 41 stromab der Umlaufdruckwaage 20 eine Staudüse als Drosseleinrichtung 42 angeordnet ist. Bei einer Verbindung der Förderzweigleitung 40 mit der Signalleitung 41 bei einer entsprechenden Auslenkung der Umlaufdruckwaage 20 wird an der Drosseleinrichtung 42 ein Staudruck als hydraulisches Rückstellsignal für die Fördervolumenregelung der Pumpe 2 aufgestaut, das die Fördervolumenstelleinrichtung 10 in Richtung einer Verringerung des Fördervolumens auf den von dem angesteuerten Verbraucher angeforderten Förderstroms beaufschlagt. Hierzu ist an die Signalleitung 41 zwischen der Umlaufdruckwaage 20 und der Drosseleinrichtung 42 eine Zweigleitung als Rückstellsignalleitung 43 angeschlossen, in der das hydraulische Rückstellsignal ansteht und die an das Stelldruckventil 17 zu dessen Beaufschlagung geführt ist. Durch das hydraulische Rückstellsignal wird das Stelldruckventil 17 in Richtung einer Erhöhung des erzeugten Stelldruckes beaufschlagt, um durch eine Beaufschlagung der Fördervolumenstelleinrichtung 10 in Richtung auf eine Verringerung der Fördermenge der Pumpe 2 den von der Pumpe 2 geförderten Förderstrom auf den von dem angesteuerten Verbraucher 6 angeforderten Bedarf auszuregeln.

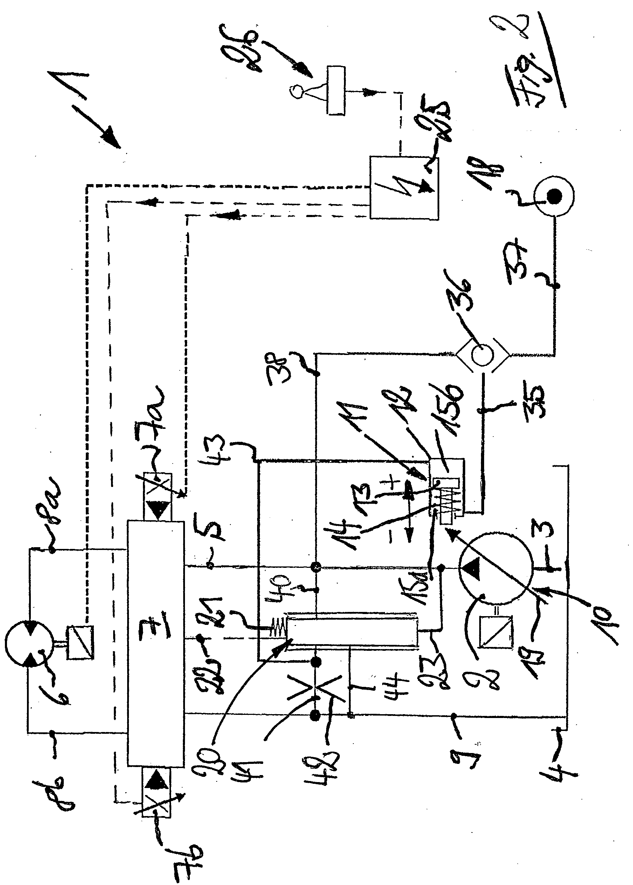

In der Figur 2 ist eine zweite Ausführungsform eines erfindungsgemäßen Antriebssystems 1 dargestellt. Das Antriebssystem 1 der Figur 2 ist mit dem Antriebssystem 1 der Figur 1 bis auf die Ausführung der Ansteuerung der Fördervolumenstelleinrichtung 10 der Pumpe 2 identisch. Gleiche Bauteile sind mit gleichen Bezugsziffern versehen.

Anstelle der als elektro-hydraulische Verstellung ausgebildeten Fördervolumenstelleinrichtung 10 der Pumpe 2 gemäß der Figur 1 ist die Fördervolumenstelleinrichtung 10 der Pumpe 2 gemäß der Figur 2 als mechanischhydraulische Verstellung ausgebildet.

Bei der Figur 2 wird das in Richtung einer Erhöhung der Fördermenge wirkende Vorgabesignal von der Feder 14 erzeugt, die ständig die Pumpe in Richtung einer Erhöhung der Fördermenge beaufschlagt.

Zudem oder alternativ zu der Feder 14 kann der Stellkolben 13 der Stellkolbeneinrichtung 11 ständig von einem Stelldruck in Richtung einer Erhöhung Fördervolumens beaufschlagt sein. Hierzu ist an einen in Richtung einer Erhöhung des Fördervolumens wirkenden Steuerdruckraum 15a der Stellkolbeneinrichtung 11, in dem ebenfalls die Feder 14 angeordnet ist, eine Stelldruckleitung 35 geführt, die mit der Steuerdruckquelle 18, beispielsweise einer Speispumpe oder einer Steuerdruckpumpe des Antriebssystems, und/oder der Förderleitung 5 der Pumpe 2 in Verbindung stehen kann. Sofern wie im dargestellten Ausführungsbeispiel die Stelldruckleitung 35 mit der Förderleitung 5 der Pumpe 2 und der Steuerdruckquelle 18 in Verbindung steht, kann eine beispielsweise als Wechselventil ausgebildete Auswahlventileinrichtung 36 vorgesehen werden, die eingangsseitig mit einer Steuerdruckleitung 37 der Steuerdruckquelle 18 und einer von der Förderleitung 5 der Pumpe 2 abzweigenden Zweigleitung 38 in Verbindung steht und ausgangsseitig an die Stelldruckleitung 35 angeschlossen ist.

Die das hydraulische Rückstellsignal führende Rückstellsignalleitung 43 ist bei der Ausführungsform der Figur 2 direkt an den in Richtung einer Verringerung des Fördervolumens wirkenden Steuerdruckraum 15b der Stellkolbeneinrichtung 11 geführt und angeschlossen. Ein derartiger Anschluss der Rückstellsignalleitung 43 an den Steuerdruckraum 15 der Stellkolbeneinrichtung 11 ist ebenfalls bei der Ausführungsform der Figur 1 möglich.

Die erfindungsgemäße Umlaufdruckwaage 20 gemäß den Figuren 1 und 2 ist ausgangsseitig weiterhin an eine Ablaufleitung 44 angeschlossen, die an die Behälterleitung 9 angeschlossen und somit zu dem Behälter 5 geführt ist.

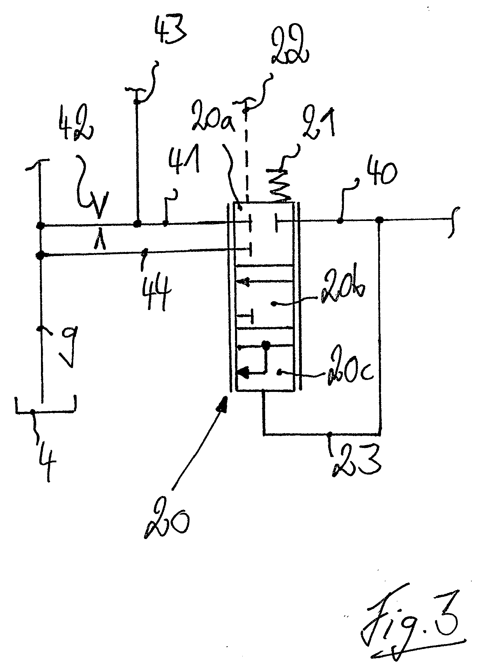

Die erfindungsgemäße Umlaufdruckwaage 20 der Figuren 1 bzw. 2 ist - wie in der Figur 3 näher dargestellt ist - als in Zwischenstellungen drosselndes Steuerventil mit drei Steuerstellungen ausgebildet. Die Umlaufdruckwaage 20 weist eine Sperrstellung 20a auf, in der die Verbindung der Förderzweigleitung 40 mit der Signalleitung 41 und der Ablaufleitung 44 abgesperrt ist.

Weiterhin weist die Umlaufdruckwaage 20 eine als Durchflussstellung ausgebildete Rückstellsignalerzeugungsstellung 20b auf, in der die Förderzweigleitung 40 mit der Signalleitung 41 in Verbindung steht, um in der Rückstellsignalleitung 43 den an der Drosseleinrichtung 42 aufgestauten hydraulischen Staudruck als hydraulisches Rückstellsignal für die Regelung der Fördermenge der Pumpe 2 zu erzeugen. In der Rückstellsignalerzeugungsstellung 20b ist die Verbindung der Förderzweigleitung 40 zur Ablaufleitung 44 abgesperrt. Die Rückstellsignalerzeugungsstellung 20b mit der Verbindung der Förderzweigleitung 40 mit der Signalleitung 41 bildet somit einen Signalpfad der Umlaufdruckwaage 20 zur Erfassung des von einem angesteuerten Verbraucher 6 erforderlichen Pumpenvolumenstroms und zur Erzeugung des hydraulischen Rückstellsignals in der Rückstellsignalleitung 43.

Weiterhin weist die erfindungsgemäße Umlaufdruckwaage 20 eine Förderstromabbaustellung 20c auf, in der die Förderzweigleitung 40 mit der Ablaufleitung 44 in Verbindung steht. In der Förderstromabbaustellung 20c kann weiterhin die Förderzweigleitung 40 mit der Signalleitung 41 verbunden bleiben. Die Förderstromabbaustellung 20c mit der Verbindung der Förderzweigleitung 40 mit der Ablaufleitung 44 bildet somit einen Leistungspfad der erfindungsgemäßen Umlaufdruckwaage 20, mit dem ein überschüssig, den Bedarf der angeforderten Verbraucher 6 übersteigender Förderstrom der Pumpe 2 zum Behälter 4 abgeleitet werden kann.

Die Rückstellsignalerzeugungsstellung 20b ist bei der erfindungsgemäßen Druckwaage 20 zwischen der Sperrstellung 20a und der Förderstromabbaustellung 20c angeordnet.

Die Umlaufdruckwaage 20 ist in Richtung der Sperrstellung 20a von dem höchsten Lastdruck der angesteuerten Verbraucher sowie einer Federeinrichtung 21 beaufschlagt ist und in Richtung der Rückstellsignalerzeugungsstellung 20b sowie der Förderstromabbaustellung 20c von dem Förderdruck der Pumpe 2 beaufschlagt ist. Hierzu ist an eine in Richtung einer Sperrstellung 20a wirkende Steuerfläche der Umlaufdruckwaage 20 eine den höchsten Lastdruck der angesteuerten Verbraucher 6 führende Lastdruckmeldeleitung 22 angeschlossen. An eine in Richtung der Rückstellsignalerzeugungsstellung 20b sowie der Förderstromabbaustellung 20c wirkende Steuerfläche der Umlaufdruckwaage 20 ist eine von der Förderleitung 5 bzw. der Förderzweigleitung 40 abzweigende Signalleitung 23 angeschlossen.

Die erfindungsgemäße Druckwaage 20 ermöglicht in der Förderstromabbaustellung 20c eine Verbindung der Förderleitung 5 mit dem Behälter 4 unter Umgehung der in der Signalleitung 41 angeordneten Drosseleinrichtung 42 auf. Die erfindungsgemäße Druckwaage 20 ermöglicht somit in der Förderstromabbaustellung 20c über die Verbindung der Förderzweigleitung 40 mit der Ablaufleitung 44 einen Abbau des Leistungsvolumenstrom der Pumpe 2 in der Förderleitung 5 und somit den Abbau der Pumpenüberschussmenge zum Behälter 4.

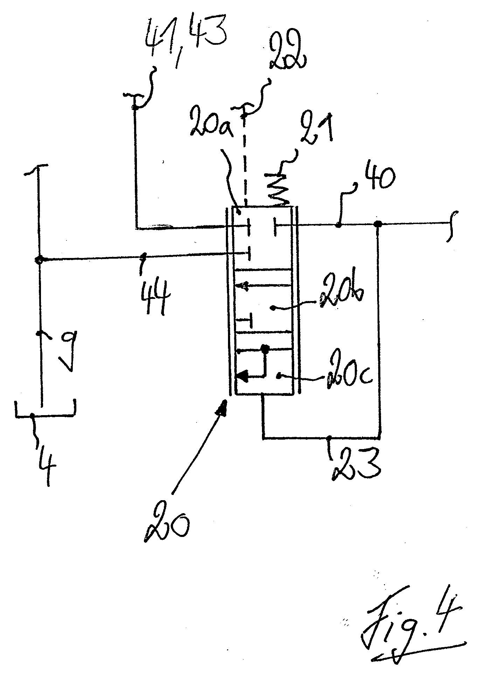

In der Figur 4 ist eine weitere Ausführungsform der Erfindung dargestellt, bei der anstelle der Drosseleinrichtung 42 das hydraulische Rückstellsignal an einer entsprechenden Steuer- bzw. Regelkante in der Rückstellsignalerzeugungsstellung 20b der Umlaufdruckwaage 20 erzeugt wird. Die an den Ausgang der Umlaufdruckwaage 20 angeschlossenen Signalleitung 41 bildet somit die Rückstellsignalleitung 43, die zur Regelung der Fördermenge der Pumpe 2 gemäß der Figur 1 direkt an das Stelldruckventil 17 oder gemäß der Figur 2 direkt an den in Richtung einer Verringerung des Fördervolumens wirkenden Steuerdruckraum 15b der Stellkolbeneinrichtung 11 geführt und angeschlossen werden kann.

Die erfindungsgemäße Umlaufdruckwaage 20 gemäß den Figuren 3 und 4 ermöglicht somit mit der Rückstellsignalerzeugungsstellung 20b und der Förderstromabbaustellung 20c eine erfindungsgemäße Trennung des Signalpfades und des Leistungspfades.

Durch die Vorlagerung der Rückstellsignalerzeugungsstellung 20b bezüglich der Förderstromabbaustellung 20c wird erzielt, dass bei einer Betätigung der Umlaufdruckwaage 20 in Richtung der Förderstromabbaustellung 20c das hydraulische Rückstellsignal in der Rückstellsignalleitung 43 zur Regelung der Pumpenfördermenge erzeugt wird, bevor in der Förderstromabbaustellung 20c der Leistungssignalpfad zum Abbau des überschüssigen Förderstroms der Pumpe 2 zum Behälter freigegeben wird. Leistungsverluste, die durch das Öffnen des Leistungspfades in der Förderstromabbaustellung 20c entstehen, können durch die Vorlagerung der Rückstellsignalerzeugungsstellung 20b verringert bzw. vermieden werden.

Die erfindungsgemäße Umlaufdruckwaage 20 ermöglicht, dass differenzdruckabhängig überschüssiger, den Bedarf der angesteuerte Verbraucher 6 übersteigender Förderstrom der Pumpe 2 zum Behälter 4 abgebaut werden kann. Mit der erfindungsgemäße Umlaufdruckwaage 20 kann somit überschüssige Leistung ohne zusätzliche Ventile, wie beispielsweise bislang erforderliche Überströmventile, aus dem Antriebssystem 1 entnommen werden, um Folgeschäden an den Verbrauchern zu vermeiden.

Bei der erfindungsgemäßen Umlaufdruckwaage 20 entspricht die Federvorspannung der Federeinrichtung 21 der Regeldruckdifferenz des Load-Sensing-Antriebssystems 1. Gemäß einer nicht näher dargestellten Weiterbildung der Erfindung, kann durch eine gestufte Federvorspannung der Federeinrichtung 21 der Umlaufdruckwaage 20 beim Übergang von der Rückstellsignalerzeugungsstellung 20b in die Förderstromabbaustellung 20c eine Zunahme der Federvorspannung und somit eine Anheben der Regeldruckdifferenz erzielt werden.

## Patentansprüche

1. Hydrostatisches Antriebssystem (1) mit einer im Fördervolumen verstellbaren Pumpe, (2) die zur Versorgung mindestens eines Verbrauchers vorgesehen ist, wobei eine Fördervolumenstelleinrichtung (10) der Pumpe (2) mittels eines Vorgabesignals in Richtung einer Erhöhung des Fördervolumens beaufschlagt ist und in Abhängigkeit von einem den überschüssig geförderten Volumenstrom der Pumpe (2) erfassenden, hydraulischen Rückstellsignal in Richtung einer Verringerung des Fördervolumens beaufschlagt ist, wobei zur Erzeugung des Rückstellsignals eine Umlaufdruckwaage (20) vorgesehen ist, die in einem eine Förderleitung (5) der Pumpe (2) mit einem Behälter (4) verbindenden Strömungspfad angeordnet ist und in einer Rückstellsignalerzeugungsstellung (20b) das hydraulische Rückstellsignal erzeugt,
**dadurch gekennzeichnet, dass** die Umlaufdruckwaage (20) neben der Rückstellsignalerzeugungsstellung (20b) eine Förderstromabbaustellung (20c) zum Abbau des Pumpenförderstroms der Pumpe (2) zu dem Behälter (4) aufweist.

2. Hydrostatisches Antriebssystem nach Anspruch 1, **dadurch gekennzeichnet, dass** die Umlaufdruckwaage (20) eingangsseitig an eine von der Förderleitung (5) der Pumpe (2) abzweigende Förderzweigleitung (40) angeschlossen ist und ausgangsseitig an eine Signalleitung (41) angeschlossen ist sowie ausgangsseitig an eine zu dem Behälter (4) geführte Ablaufleitung (44) angeschlossen ist.

3. Hydrostatisches Antriebssystem nach Anspruch 1 oder 2, **dadurch gekennzeichnet, dass** die Umlaufdruckwaage (20) zur Erzeugung des hydraulischen Rückstellsignals mit einer Steuerkante versehen ist, wobei die Signalleitung (41) als eine das hydraulische Rückstellsignal führende Rückstellsignalleitung (43) an die Pumpe (2) zur Pumpenregelung zurückgeführt ist.

4. Hydrostatisches Antriebssystem nach Anspruch 1 oder 2, **dadurch gekennzeichnet, dass** die Signalleitung (41) mit dem Behälter (4) in Verbindung steht und zur Erzeugung des hydraulischen Rückstellsignals in der Signalleitung (41) eine Drosseleinrichtung (42) angeordnet ist, wobei an die Signalleitung (41) zwischen der Umlaufdruckwaage (20) und der Drosseleinrichtung (42) eine Zweigleitung als eine das hydraulische Rückstellsignal führende Rückstellsignalleitung (43) angeschlossen ist, die an die Pumpe (2) zur Pumpenregelung zurückgeführt ist.

5. Hydrostatisches Antriebssystem nach einem der Ansprüche 2 bis 4, **dadurch gekennzeichnet, dass** die Umlaufdruckwaage (20) eine Sperrstellung (20a), in der die Verbindung der Förderzweigleitung (40) mit der Signalleitung (41) und der Ablaufleitung (44) abgesperrt ist, die Rückstellsignalerzeugungsstellung (20b), in der die Förderzweigleitung (40) mit der Signalleitung (41) in Verbindung steht, und eine Förderstromabbaustellung (20c) aufweist, in der Förderzweigleitung (44) mit der Ablaufleitung (44) in Verbindung steht.

6. Hydrostatisches Antriebssystem nach Anspruch 5, **dadurch gekennzeichnet, dass** die Rückstellsignalerzeugungsstellung (20b) zwischen der Sperrstellung (20a) und der Förderstromabbaustellung (20c) der Umlaufdruckwaage (20) angeordnet ist.

7. Hydrostatisches Antriebssystem nach Anspruch 5 oder 6, **dadurch gekennzeichnet, dass** die Umlaufdruckwaage (20) in Richtung der Sperrstellung (20a) von dem höchsten Lastdruck der angesteuerten Verbraucher (7) sowie einer Federeinrichtung (21) beaufschlagt ist und in Richtung der Rückstellsignalerzeugungsstellung (20b) sowie der Förderstromabbaustellung (20c) von dem Förderdruck der Pumpe (2) beaufschlagt ist.

8. Hydrostatisches Antriebssystem nach Anspruch 7, **dadurch gekennzeichnet, dass** die Federeinrichtung (21) eine gestufte Federvorspannung beim Übergang der Umlaufdruckwaage (20) von der Rückstellsignalerzeugungsstellung (20b) in die Förderstromabbaustellung (20c) aufweist.

## Claims

1. Hydrostatic drive system (1) having a pump (2) which has an adjustable feed volume and is provided for supplying at least one consumer, wherein a feed volume adjustment device (10) of the pump (2) is adjusted in the direction of increasing the feed volume by means of a preset signal, and is adjusted in the direction of reducing the feed volume as a function of a hydraulic resetting signal which detects the excessively delivered volume flow of the pump (2), wherein in order to generate the resetting signal a circulation pressure balance (20) is provided which is arranged in a flow path connecting a feed line (5) of the pump (2) to a container (4) and generates the hydraulic resetting signal in a resetting signal-generating setting (20b), **characterized in that** the circulation pressure balance (20) has, in addition to the resetting signal-generating setting (20b), a feed flow reduction-setting (20c) for reducing the pump feed flow of the pump (2) to the container (4).

2. Hydrostatic drive system according to Claim 1, **characterized in that** the circulation pressure balance (20) is connected on the input side to a feed branch line (40), which branches off from the feed line (5) of the pump (2), and is connected on the output side to a signal line (41) as well as being connected on the output side to a discharge line (44) which leads to the container (4).

3. Hydrostatic drive system according to Claim 1 or 2, **characterized in that** the circulation pressure balance (20) is provided with a control edge for generating resetting signal, wherein the signal line (41) is fed back as a resetting signal line (43), conducting the hydraulic resetting signal, to the pump (2) for closed-loop control of the pump.

4. Hydrostatic drive system according to Claim 1 or 2, **characterized in that** the signal line (41) is connected to the container (4), and a throttle device (42) is arranged in the signal line (41) for generating the hydraulic resetting signal, wherein a branch line is connected, as a resetting signal line (43) which conducts the hydraulic resetting signal and is fed back to the pump (2) for closed-loop control of the pump, to the signal line (41) between the circulation pressure balance (20) and the throttle device (42).

5. Hydrostatic drive system according to one of Claims 2 to 4, **characterized in that** the circulation pressure balance (20) has an off setting (20a) in which the connection of the feed branch line (40) to the signal line (41) and the discharge line (44) is shut off, the resetting signal-generating setting (20b) in which the feed branch line (40) is connected to the signal line (41), and a feed flow-reduction setting (20c) in which the feed branch line (44) is connected to the discharge line (44).

6. Hydrostatic drive system according to Claim 5, **characterized in that** the resetting signal-generating setting (20b) is arranged between the off setting (20a) and the feed flow-reduction setting (20c) of the circulation pressure balance (20).

7. Hydrostatic drive system according to Claim 5 or 6, **characterized in that** the circulation pressure balance (20) is adjusted in the direction of the off setting (20a) by the maximum load pressure of the actuated consumers (7) and a spring device (21), and is adjusted in the direction of the resetting signal-generating setting (20b) and the feed flow-reduction setting (20c) by the feed pressure of the pump (2).

8. Hydrostatic drive system according to Claim 7, **characterized in that** the spring device (21) has a stepped spring prestress at the transition of the circulation pressure balance (20) from the resetting signal-generating setting (20b) into the feed flow-reduction setting (20c).

## Revendications

1. Système d'entraînement hydrostatique (1) comportant une pompe (2) à volume de déplacement réglable, qui est prévue pour alimenter au moins une charge, dans lequel un dispositif de réglage de volume de déplacement (10) de la pompe (2) est attaqué au moyen d'un signal de consigne dans le sens d'une augmentation du volume de déplacement et est attaqué, en fonction d'un signal de réinitialisation hydraulique détectant le débit volumétrique transporté en excès de la pompe (2) dans le sens d'une diminution du volume de déplacement, dans lequel il est prévu une balance de pression d'alimentation (20) pour générer le signal de réinitialisation, qui est disposée sur un trajet d'écoulement reliant une conduite de transport (5) de la pompe (2) à un récipient (4) et génère le signal de réinitialisation hydraulique en un point de génération de signal de réinitialisation (20b),
**caractérisé en ce que** la balance de pression d'alimentation (20) comporte, à proximité du point de génération de signal de réinitialisation (20b), un point de réduction de débit de transport (20c) destiné à réduire le débit de transport de la pompe (2) vers le récipient (4).

2. Système d'entraînement hydrostatique selon la revendication 1, **caractérisé en ce que** la balance de pression d'alimentation (20) est raccordée, côté entrée, à une conduite de ramification de transport (40) se ramifiant à partir de la conduite de transport (5) de la pompe (2) et est raccordée, côté sortie, à une conduite de signal (41) et est également raccordée, côté sortie, à une conduite d'évacuation (44) reliée au récipient (4).

3. Système d'entraînement hydrostatique selon la revendication 1 ou 2, **caractérisé en ce que** la balance de pression d'alimentation (20) est munie pour générer le signal de réinitialisation hydraulique, d'une arête de commande, dans lequel la conduite de signal (41) est ramenée, sous la forme d'une conduite de signal de réinitialisation (43) acheminant le signal de réinitialisation hydraulique, à la pompe (2) à des fins de régulation de la pompe.

4. Système d'entraînement hydrostatique selon la revendication 1 ou 2, **caractérisé en ce que** la conduite de signal (41) est reliée au récipient (4) et **en ce qu'**un dispositif d'étranglement (42) est disposé sur la conduite de signal (41) pour générer le signal de réinitialisation hydraulique, dans lequel une conduite de ramification est raccordée à la conduite de signal (41) entre la balance de pression d'alimentation (20) et le dispositif d'étranglement (42) en tant que conduite de signal de réinitialisation (43) acheminant le signal de réinitialisation hydraulique, laquelle conduite de ramification est ramenée à la pompe (2) à des fins de régulation de la pompe.

5. Système d'entraînement hydrostatique selon l'une quelconque des revendications 2 à 4, **caractérisé en ce que** la balance de pression d'alimentation (20) comporte un point d'arrêt (20a) où la liaison de la conduite de ramification de transport (40) à la conduite de signal (41) et à la conduite d'évacuation (44) est interrompue, le point de génération de signal de réinitialisation (20b) où la conduite de ramification de transport (40) est reliée à la conduite de signal (41) et un point de réduction de débit de transport (20c) où la conduite de ramification de transport (44) est reliée à la conduite d'évacuation (44).

6. Système d'entraînement hydrostatique selon la revendication 5, **caractérisé en ce que** le point de génération de signal de réinitialisation (20b) est situé entre le point d'arrêt (20a) et le point de réduction de débit de transport (20c) de la balance de pression d'alimentation (20).

7. Système d'entraînement hydrostatique selon la revendication 5 ou 6, **caractérisé en ce que** la balance de pression d'alimentation (20) est attaquée dans le sens du point d'arrêt (20a) par la pression de charge la plus élevée de la charge (7) commandée et par un dispositif à ressort (21) et, dans le sens du point de génération de signal de réinitialisation (20b) et du point de réduction de débit de transport (20c), est attaqué par la pression de transport de la pompe (2).

8. Système d'entraînement hydrostatique selon la revendication 7, **caractérisé en ce que** le dispositif à ressort (21) présente une précontrainte de ressort échelonnée lorsque la balance de pression d'alimentation (20) passe de la position de génération de signal de réinitialisation (20b) à la position de réduction de débit de transport (20c).
